## Europäisches Patentamt

**(19)** **European Patent Office**

**Office européen des brevets**

**(11)** Publication number: **0 054 046**

**B1**

**(12)** EUROPEAN PATENT SPECIFICATION

**(45)** Date of publication of patent specification: **01.10.86**

**(51)** Int. Cl.⁴: **F 26 B 5/16,** F 26 B 21/00, F 25 B 15/02

**(21)** Application number: **81901714.6**

**(22)** Date of filing: **11.06.81**

**(86)** International application number: **PCT/HU81/00025**

**(87)** International publication number: **WO 81/03695 24.12.81 Gazette 81/30**

**(54)** METHOD AND EQUIPMENT FOR THE ENERGY-SAVING DRYING ESPECIALLY OF HEAT-SENSITIVE AS WELL AS OF TOXIC AND/OR SMELLY GAS PRODUCING MATERIALS.

**(30)** Priority: **18.06.80 HU 151880**

**(43)** Date of publication of application: **23.06.82 Bulletin 82/25**

**(45)** Publication of the grant of the patent: **01.10.86 Bulletin 86/40**

**(84)** Designated Contracting States: **AT CH DE FR GB LI SE**

**(56)** References cited:
FR-A- 939 336
FR-A-2 446 995
GB-A-1 175 888
GB-A-1 305 070
SU-A- 186 514
SU-A- 567 055
US-A-2 249 625
US-A-3 094 574
US-A-4 193 205

Spravochnik Holodilschika, publ. 1962, Mashgiz, Moscow, page 144

**(73)** Proprietor: **INNOFINANCE Altalános Innováciòs Pénzintézet Szabadság tér 5-6 H-1054 Budapest V (HU)**

**(72)** Inventor: **BARTA, György Balassi B. u.21/23 H-1055 Budapest (HU)**
Inventor: **RAKOLCAI, Lâszlö Vajda P.u.43 H-1089 Budapest (HU)**
Inventor: **ASZLÄNYL, Jôzsef Nyâri P.u.10 H-1056 Budapest (HU)**
Inventor: **HEGEDÜS, Sândor Villânyi ut. 48/a H-1113 Budapest (HU)**

**(74)** Representative: **Patentanwälte Viering & Jentschura Steinsdorfstrasse 6 D-8000 München 22 (DE)**

Courier Press, Leamington Spa, England.

## Description

The invention relates to a method and an equipment for the energy saving drying especially of heat-sensitive materials, as e.g. provisions, agricultural products, and — in a special embodiment of the invention — of toxic and/or smelly gas producing organic substances and organic sludges, air or a gaseous medium being used as a drying medium in an open or closed system to extract the moisture of the material to be dried.

Essentially, the cycle of proceedings of equipments and processes operating with air or a gaseous drying medium is taking place in such a manner, that the drying medium is simultaneously the heat-carrying agent, i.e. it delivers the heat quantity needed for the evaporation of the moisture to be removed. The moisture leaving the material to be dried mixes with the drying medium and discharges in the atmosphere in form of a saturated or supersaturated steam.

When increasing the heat content and thus raising the temperature of the drying medium drying capacity may be increased. However, from the point of view of thermodynamics, this increase of the drying temperature is to be considered as disadvantageous, i.e. the endeavour for an increased capacity in such a manner involves a deterioration of the efficiency of the process as the process would be shifted more and more from ideal reversibility to irreversibility and to a disadvantageous efficiency.

Further, a rise of the temperature with the intention to increase capacity is accompanied by detrimental consequences at certain heat-sensitive materials, since these materials become decomposed at an increasing rate, when the temperature is rising, e.g. organic substances in general, provisions and agricultural products. Decomposition will considerably diminish the value in use of the drying process and in fact it may happen that it is entirely annihilated.

From the aforesaid it becomes obvious, that if a considerable moisture extraction in spite of using a drying temperature became possible with the process and equipment mentioned above, considerable improvements regarding to the efficiency of the drying process as well as to the quality of the dried product could be reached.

A moisture extraction without heating the material to be dried is already known from FR—A—939336. In the known process the gaseous drying medium (air) leaving a drying chamber containing the material to be dried is circulated through an absorber in which the drying medium is brought into contact with a humidity absorbing solution to extract humidity in the form of steam from the drying medium. The drying medium leaving the absorber is recirculated in a closed system into the drying chamber. The absorbing solution is circulated through an expeller in order that absorbed humidity is expelled from the solution in the form of steam which then is compressed and condensed to liberate heat of compression and of evaporation for the expelling process. However, the drying medium leaving the absorber can not dissipate all the heat liberated in the absorber when the steam extracted from the drying medium is condensed and is dissolved in the absorbing solution. Accordingly, the temperature of the absorbing solution is raised followed by a reduction of both the proportion of absorbed humidity and the portion of humidity extracted from the drying medium. Further, all the heat required for a complete expulsion of the absorbed humidity can scarcely be created by the compression and condensation of the expelled steam because an excessively high compression pressure would have to be used for an adequate superheating of the expelled steam. Accordingly, part of the absorbed humidity is left in the absorbing solution and is recirculated into the absorber followed by an additional reduction of humidity capable to be extracted from the drying medium and leading, at least, to a condition under which the materials to be dried can no longer be dried by the drying medium.

The aim of the invention is to improve the method and equipment of the kind described in the preamble part of claims 1 and 7, respectively, in such a way that an effective energy saving drying can be reached with a low drying temperature.

According to the invention, this aim is achieved by cooling the drying medium together with the absorbing medium contacting the drying medium and by supplying the heat of evaporation of the expelled steam into the drying medium, as indicated in the characterizing part of claims 1 and 7, respectively.

Preferred embodiments of the invention are described by claims 2 to 6 and 8 to 14.

By cooling the humidity solution together with the drying medium when contacted by the absorbing solution, the heat liberated during the absorption process is dissipated and the quantity of the humidity extracted by the absorbing solution from the drying medium can be increased to provide for the utilization of the heat content of the original humidity of the drying medium or of the moisture having been extracted from the product for a preheating of the drying medium. In this way heat economy of the process can be improved up to the physically possible optimum. Further, a great drying capacity of the drying medium can be obtained by means of a drying medium of lower temperature resulting simultaneously in the elimination of damages effected by heat.

The moisture content of the drying medium is extracted by bringing the drying medium into contact with the humidity absorbing solution prior or after contacting the material to be dried. In both cases part of the heat of evaporation of the humidity evaporated by solar energy may also be used in course of the heat exchange with the drying medium if the drying medium is used in an open system.

By applying the process according to the invention, drying in a closed cycle may be also realized. In this case the drying medium is circulated in a closed circuit through the material to be dried and the moisture content of the drying medium having been extracted by the humidity absorbing solution is removed from the closed system, while the heat content thereof is recirculated into the closed circuit.

Drying in a closed circuit can particularly advantageously be used for drying smelly or toxic materials and the process may be combined with the equipment serving for a burning of the mentioned materials.

Industrial waste-water — especially in the chemical, food, and pharmaceutical industry — as well as communal sewage contain contaminating, toxic and smelly gas producing substances in a considerable quantity. The diverse sewage treatment plants serve for the extraction, decomposition, neutralization and conversion of said materials with the intention to render them harmless. The by-products of these materials — contaminating the environment — are diverse sludges, mostly containing organic substances in a significant quantity, which are generally burned, although they could well be used — due to their considerable content of organic substances — for soil amelioration. In such a manner, apart from the fact, that useful value is going to be lost, due to the high water content a considerable quantity of energy i.e. heat energy is consumed. Due to the more and more rigorous prescriptions relating to ecology all over the world, valuable energy carriers in an increasing quantity have been continuously used. It may happen, that the sludges — at the expense of a considerable heat energy — are dried, degerminated and by adding additives rendered suitable for soil amelioration.

However, the heat quantity being discharged with the flue gases arising from the burnt energy carrier and the burning air can be recuperated with inefficiency only, increasing the costs of sludge treatment. For the reasons of energy savings in several cases said process cannot be used at all. The application of the process is further complicated by the fact, that the flue gases to be discharged are to be separated from dust and to be cleaned.

In course of developing the process according to the invention we arrived at the recognition in so far as sludge treatment can be decisively improved by using the heat quantity resulting from the utilization of the own thermal value of the previously dried sludge for heating the expeller and it can be well used for substituting the heating energy to be used in the combustion equipment of the expeller in dependence of the combustile content and the thermal value of the sludge.

In sense of the invention, in said cases we are proceeding in such a manner, that starting from a state — in which the sludge is pre-condensed to a 30% solid content — the sludge is dried to an insignificant moisture content (1—2%), the drying medium having been enriched with the moisture content of the sludge is brought into contact with the humidity absorbing solution and the drying medium having been dried in such a manner is led through the drier, at least the dried sludge is burnt in the combustion space of the expeller. In case if the heating value is not sufficient for maintaining the process, supplementary firing becomes necessary.

When operating with a supplementary firing, intensity thereof can be controlled by the pressure of the condensed steam having been evaporated in the combustion space of the expeller, while the rate of discharge of the excess water may be controlled by the water level in the steam generator.

For air-conditioning purposes the moisture content of the ambient air is adjusted to the prescribed value by bringing it into contact with the humidity absorbing solution in the absorber; the humidity abstracted with the solution is expelled and evaporated in the expeller and the steam thus obtained is used in the heat exchanger for heating the air or heating the absorption cooling equipment. In case, if any other liquid (e.g. a solvent), than water is to be evaporated in the drier, the absorbing solution is to be selected accordingly.

The invention will now be described in detail by means of preferred embodiments and by aid of the accompanying drawing, wherein:

figure 1 is the schematical side-view of one of the preferred embodiments,

figure 2 is the schematical side-view of another preferred embodiment,

figure 3 is the schematical side-view of a further embodiment.

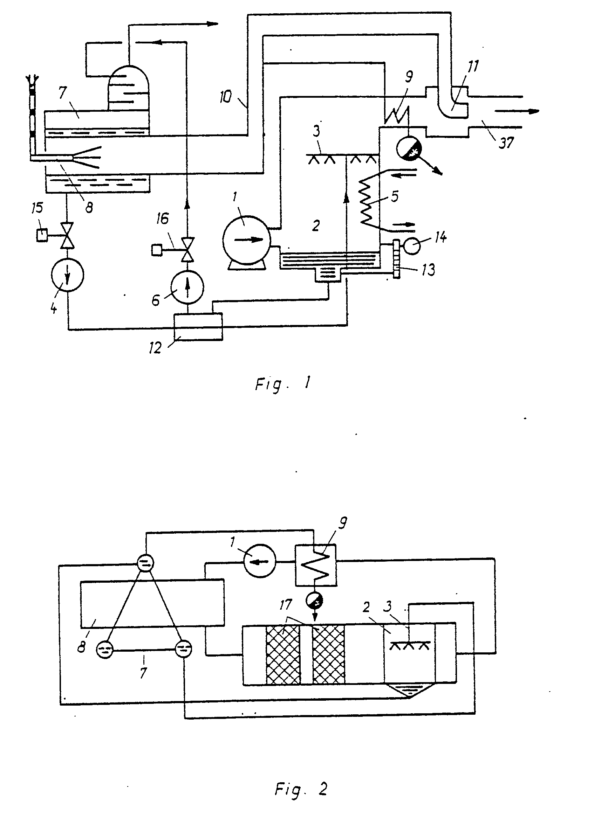

With reference to figure 1, the ventilator 1 is pressing the ambient air into the absorber 2, where the air is brought into contact in a counterflow with the humidity absorbing solution sprayed through the nozzles of the liquid distributor 3 and being delivered by pump 4.

The liquid humidity absorbing solution having been sprayed through the nozzles of the liquid distributor 3 of the absorber 2 is able to reduce the moisture content of the air in a rate corresponding to the state of equilibrium. The state of equilibrium can be determined by means of unambiguous physical correlations from the initial weight-concentration of the solution and the temperature of absorption. The equilibrium moisture content can be considerably reduced e.g. by means of a water cooled condenser coil 5. So e.g. by using an aqueous solution of lithium chloride the moisture content of the air of a temperature of 32°C and with a relative moisture content of 40% may be reduced to a value corresponding to a dew-point of 0°C, that means, that about 8 $g/m^3$ moisture can be extracted. The quantity of the humidity extracted may be increased by increasing the concentration of the solution and/or by reducing the temperature of the condenser coil 5.

When water cooled in a cooling tower is used as coolant, the quantity of the humidity absorbed by the solution can be considerably increased by reducing the ambient temperature, simultaneously maintaining the value of the solution circulation. In the absorber 2 the humidity absorbing solution is heated in course of absorbing the moisture content of the air. In order to be able to maintain the prescribed moisture content of the air, the liberated heat is to be extracted by means of the condenser coil 5; up to a certain air temperature heat extraction may take place by the air itself; in this case the socalled solution heat can be utilized for heating the drying air to increase the efficiency of the process.

However, in any case, the air leaving the absorber 2 is of the same temperature as the ambient air or is even warmer, but by all means it contains less moisture. The solution pump delivers the solution enriched with water to the expeller 7. Under the heating influence of the flue gases of the combustion equipment 8 — in our example an oil burner — the humidity having been absorbed from the solution is expelled in the form of steam, whereas the water steam is transferring the heat contained therein in the heat exchanger 9, resp. the condenser coil during condensation to the dry air leaving the absorber 2. In course of a continuous operation, accurately the same quantity of steam is condensed, in the heat exchanger 9 and in the condenser coil, resp., as been extracted from the air in the absorber 2. The humidity quantity of 8 $g/m^3$ according to our example represents e.g. a heat quantity of 4.5 kcal, by which the air temperature can be raised by about 14°C.

The equipment previously described represents practically a thermic compressor, which, when acting as a heat pump, renders the heat content of the steam quantity corresponding to the moisture content of the ambient air suitable for heating the air to raise the temperature of the air.

The temperature and pressure of the steam leaving the expeller 7 depend on the concentration of the solution in the expeller 7 which in turn depends on the delivery capacity of the pumps 4, 6. From the heat exchanger resp. the condenser coil the condensate is discharged into the atmosphere in a quantity which corresponds to the quantity of the humidity having been absorbed in the absorber 2.

The capacity of the combustion equipment 8 may be selected in such a manner, that in addition to the heat requirement of the expeller 7 it should further heat the drying air up to the temperature permitted by the material to be dried. In this case, the flue gas of the combustion equipment 8 is led via the flue 10 of waste gases into the mixing-chamber 11 in the conduit 37 of the absorber 2 delivering the drying medium, where it is mixed with the dry air leaving the absorber 2. In such a manner firing can be rendered practically free of losses. At last, economy can be further increased by applying the solution heat exchanger 12.

The expeller 7 can be heated by the flue gas of any type of combustion equipment, with steam or any other heat source staying at disposal on a given place. Flue gases may be directly used for heating the air. Instead of the solution pumps 4, 6 solely the solution pump 4 may be used with a solution stream being divided on the delivery side between the absorber 2 and the expeller 7, or the solution pump 6 alone is used, when the pressure in the expeller 7 is such, that spraying of the solution through the nozzles of the liquid distributor 3 becomes possible.

When we intend to apply the process according to the invention with an already existing equipment, the absorber 2 may be connected either to the suction or to the delivery side of ventilator 1. The expeller 7 may be built-in into the path of the flue gas stream, while the heat exchanger 9 is to be inserted into the cold section before the inlet of the flue gas or, in case of suction at the absorber 2, it is to be connected to the delivery side of the ventilator 1.

For a continuous control of the function of the system a single actual value suffices and this is the liquid level in the absorber 2. The increase of the moisture content of the drying medium entering into the system is accompanied by the increase of the volume of the absorbing solution. As a consequence, the level sensing element 14 arranged in the level indicator 13 is giving a pulse for the increase of the capacity of the combustion equipment 8 and for opening the control valves 15, 16 and thereby for the increase of the quantity of the circulated solution, as a consequence, the system comes to an equilibrium state corresponding to a higher moisture content. The same equilibrium sets in without the control valves 15 and 16, when the equipment provides suitable space for receiving the increased volume of the solution.

In a contrary case, when the humidity content of the air decreases, the liquid levels in the absorber 2 and in the level indicator 13 are descending. The level sensing element 14 detects the descent of the liquid level and gives a pulse for decreasing the capacity of the control valves 15, 16. As a consequence, the quantity of the circulated solution also decreases and the system is set in a state of equilibrium, corresponding to a lower humidity content. The state of equilibrium may be reached by the exclusive decrease of the heating intensity of the combustion equipment 8.

At another preferred embodiment of the drier according to the invention the drier is inserted into the flue 10 of the waste gases. In this case humidity in a significant quantity is discharged through the outlet of the system; the humidity consists of the original moisture content of the air and the moisture having been extracted from the dried product. This humidity quantity is carrying a considerable amount of heat, however, due to the low temperature and the corrosive character utilization thereof would be uneconomical or could not be carried out at all.

The humidity mentioned above is absorbed in the absorber 2 and converted in the expeller 7 into water steam of increased temperature and pressure. This water steam can be expediently used either for heating the air to be introduced into the system or for pre-heating the material. In such a manner the specific fuel consumption of the drier related to the dried material can be considerably reduced. In addition to this, due to pre-drying, the temperature of the cylindrical drum may be kept on a lower level resulting in an improved quality of the dried organic material.

Another method may be used, when — as seen in figure 2 — the absorber is inserted into the drying system in such a manner, that the humidity is quasi "lifted out" by the solution from the closed space. The solution absorbs the moisture content coming from the wet material stored in the recipient 17 in the absorber 2. In the expeller 7 the humidity is transformed into water steam, which — after having heated the air in the heat exchanger 9 — is discharged into the atmosphere. In this case the drying process takes place in a completely closed circuit, and enables the use of any drying medium not being air, or e.g. the drying of toxic materials.

Furthermore, the process may be well used for air-conditioning purposes, i.e. for heating or cooling or for the control of the moisture content of the air. The absorber 2 is adjusting the humidity of the ambient air to the prescribed value. According to necessity, the temperature of the air leaving the absorber 2 can be heated by means of the steam coming from the expeller 7 via the heat exchanger or the steam can be used for heating an absorption cooling equipment and cooling of the air may be realized up to the rate corresponding to the humidity contents having been extracted. Simultaneously, cooling effect can be achieved by spraying water into the dry air.

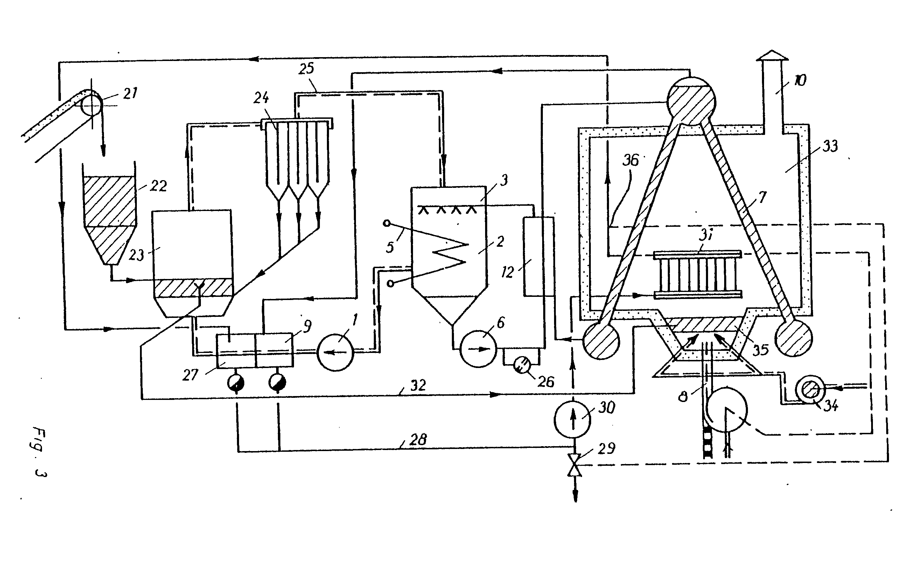

A further mode of performation of the process according to the invention and the equipment being suitable for performing the process will be described in connection with figure 3. The construction and operation of the equipment is as follows:

The ventilator 1 is producing a depression in the absorber 2. The air — streaming under the influence of the activity of the ventilator — comes into contact with the humidity absorbing solution arriving through the nozzles of the liquid distributor 3. The solution may be the aqueous solution of lithium chloride or lithium bromide or any other humidity absorbing solution.

The humidity absorbing solution having been sprayed by means of the nozzles of the liquid distributor 3 into the absorber 2 reduces the humidity content of the air in a rate corresponding to the state of equilibrium. The humidity content corresponding to the state of equilibrium may be reduced by means of the condenser coil 5. In the absorber 2 the humidity absorbing solution is warmed up, when the moisture is dissolved, the heat developed is also extracted by the condenser coil 5.

The air leaving the absorber via the ventilator 1 has the same temperature as the ambient air or it is even warmer, but the moisture content is always less. The solution pump 6 delivers the humidity absorbing solution having been diluted with water into the expeller 7. The combustion equipment 8 — in our example an oil burner — heats the humidity absorbing solution, by burning the dry sludge in a manner to be described later, in the expeller 7. From the humidity absorbing solution the humidity having been absorbed, is expelled in form of steam and, after having passed through the heat exchanger 9, it transfers its heat content from the absorber 2 to the dry air having been exhausted by the ventilator 1. By using the solution exchanger 12 economy of the system may be increased. Spraying of the absorbing solution through the nozzles of the liquid distributor is induced by the overpressure in the expeller 7.

The mechanically dehydrated and compacted sludge containing about 30% solid matter is transported by means of the conveyor 21 to the receiver 22. The sludge is dried in the drier 23 — in our example a fluidization drier — by means of the preheated dry air, having been introduced at the bottom through the heat exchanger 9 by means of the ventilator 1 and circulating in a closed circuit, to a moisture content of 1—2%. The fly dust having been seized by the drying air streaming through the drier 23 precipitates in the precipitator 24, wherefrom it is recirculated into the drier 23. The air containing a small quantity of dust and the moisture having been extracted in the drier 23 streams from the precipitator 24 through the pipeline 25 under the depression prevailing in the absorber 2 into said absorber and transfers its moisture content to the humidity absorbing solution. The contamination contained in the absorbing solution is entrapped in the filter 26.

The task of the heat exchanger 27 is to replace the heat losses, when starting the operation and during the operational period. The condensate of the heat exchanger 9 and the heat exchanger 27 is discharged by the common pipeline 28. The part of the condensate, which corresponds to the moisture content of the sludge, is discharged by valve 29 controlling the flow-off. This hot water may be utilized for the pre-heating of the sludge in the receiver 22 or in any other heat utilizing equipment.

The remaining part of the condensate is delivered by the pump 30 into the boiler tube register 31, here the condensate evaporates and transfers its heat content via the heat exchanger 27 to the air streaming into the drier 23.

The dried sludge arrives from the drier 23 via the conveyor line 32 into the furnace 33 incorporating the expeller 7 and the boiler tube register 31. The combustible part of the dried sludge is burnt in the combustion equipment 8, the air quantity needed for this process is obtained either from the air excess of the combustion equipment 8 or it is delivered by the ventilator 34. The burnt sludge is leaving the furnace 33 through the discharge 35, while the flue gases of the furnace 33 are discharged into the atmosphere through the flue 10 of the waste gases. The flue 10 is to be formed in accordance with the prescriptions relating to environment protection in case of necessity it may be combined with a precipitator.

The automatical operation of the equipment according to the invention is ensured by the components 13, 14, 15, 16 previously described, by the pressure indicator gauge 36 of the boiler tube register 31 and the valve 29, which controls the flow-off. The higher moisture content in the closed system of the drying air does not only cause the raise of the liquid level in the absorber 2, but simultaneously it results in the increased heat demand of the heat exchanger 27. To satisfy both, the capacity of the combustion equipment 8 has to be increased.

In compliance with prevailing circumstances the equipment according to the invention may be constructed in different versions; so e.g. the combustion equipment 8 may be fired with any liquid, gaseous or solid fuel instead of oil. When a solid fuel is used, it may be mixed with the dry sludge and be burnt with it. The burnt hot sludge discharged from the discharger 35 may be well used for pre-heating the air delivered by the ventilator 34. The boiler tube register may be built-in into the path of the stream leaving the furnace 33, but the heat content of the flue gas may be used for pre-heating the air.

The application of the process according to the invention in practice will be demonstrated by means of some examples.

### Example 1

When drying cereals, e.g. maize, and the aqueous solution of lithium chloride is used in a concentration of 65% as a humidity absorbing solution in course of drying, it becomes possible to reduce the humidity content of the atmospheric drying air, which presumably amounts to 12.5 g/kg, to 2.5 g/kg prior to drying. From the humidity absorbing solution having been enriched with water, in the absorber 10 g water steam with a pressure of 1.5 bar — related to 1 kg air — may be obtained, by the aid of which the dry air can be warmed up by approx. 18°C. As a consequence, drying capacity of the air will be considerably increased in comparison with the atmospherical air, e.g. in case of the temperature of 18°C it can be doubled, resulting in an increase in the same proportion at maize drying i.e. relating to the capacity of the drier.

### Example 2

The process having been described in Example 1 is modified in so far as humidity absorption is taking place after the drying of the maize. In this case — using the same quantity of absorbing solution — a considerably higher rate of humidity absorption may be realized, since in the drying air the moisture of the dried material also appears in addition to the atmospherical moisture (in our example 12.5 g/kg), which may totally amount to 50 g humidity/kg. In this case it seems to be expedient to expel the moisture at a higher pressure, e.g. 5 bar, in the expeller. With the generated saturated steam of a pressure of 5 bar the air in the drier can be pre-heated by 90°C instead of 18°C, that means, that drying capacity may be increased to the fivefold instead of the double.

### Example 3

We proceed in accordance with Example 1 or 2, but the efficiency of expelling is further improved in such a manner, that the hot flue gases of the solid or liquid fuel used for heating the expeller are directly admixed to the drying air. In such a manner efficiency of expelling can be increased by about 25%, either in relation to example 1 or 2. The same effect may be indirectly realized i.e. by using a heat exchanger. In this case efficiency may be improved by 22—23%.

### Example 4

In course of drying limestone grist serving as a carrier for plant protectives, we intended to achieve a remanent moisture content of 0.1%. For this purpose the carrier was dried with air of the temperature of 48°C, circulated in a closed circuit and with a moisture content of 2.5 g/kg. The parameters of the air could be obtained by using the aqueous solution of lithium chloride with a concentration of 65% as a humidity absorbing medium, while absorption took place at 12°C. The solution was enriched to a water content of 69%. In the expeller steam of pressure of 1.5 bar was generated, the expeller was heated with steam of the pressure of 5 bar. The efficiency of the process can be characterized in that 110.5 kg moisture could be expelled from the closed circuit by means of 152 kg steam, that means, that a heat quantity of 650 kcal (2530 KJ) has been used for drying 1 kg water. In course of the traditional processes often 12000 KJ are required and a process, where only 5000 KJ are needed, is considered, as most advantageous.

### Example 5

For cooling and heating air-conditioning air a process has been used, in course of which the air having been exhausted from the rooms and partly mixed with fresh air is led through the absorbing unit of equipment. Here about 12 g/kg moisture may be extracted by using the aqueous concentration of lithium chloride in a concentration of 65%. In the expeller water steam in a quantity of 12 g/kg of a pressure of 2 bar may be released from the solution having been enriched in water; by means of this steam quantity the treated air of 25°C may be heated to about 45°C, as a consequence, in winter the thermal requirement of heating may be reduced, in summer again, the released steam may be well used for operating the absorption cooling equipment. In such a manner the air of a temperature of 36°C having been exhausted from the rooms may be cooled to 28°C, accordingly air-conditioning of the rooms may be ensured without requiring separate cooling energy.

Example 6

In course of drying, the mechanically dehydrated sewage sludge with a moisture contents of 60—70% is delivered into an absorber with a fluidization bed, where the drying air (20.000 Nm³, 70°C, moisture contents 2.5 g/kg) is circulated in a closed circuit. When leaving the drier with the fluidizing bed, the moisture content of the air increases to 17.00 g/kg, simultaneously the temperature is dropping to 33°C. The moisture being extracted from the sludge amounts to about 7 tons/day, while the solid matter amounts to 3 tons/day. The substance floating in the drying air is separated in a multicyclon. The moisture of the drying air having been led to the absorber is extracted by means of the lean aqueous solution of lithium chloride with a concentration of 60%, in a quantity of 2610 kg/h, until reaching the value of 2.5 g/kg; meanwhile the solution is enriched to the water content of 64%, simultaneously the mass stream is increased to 2900 kg/h. The heat having been developed in course of absorption is extracted in the water cooler. The solution having been enriched in water is pressed through the solution cooler into the expeller, where the part of the water taken up in course of absorption is leaving in form of steam of an overpressure of 0.5 bar.

The steam is used for heating the drying air circulating in a closed circuit, by means of the heat exchanger, while the expeller is heated with the dry sewage sludge. If the sewage sludge had such a high thermal value, that it is able to release heat excess, steam may be generated in the boiler tube register, while the steam thus obtained may be utilized for further heating the drying air. In case of the heating value did not enable the satisfaction of the heat demand of drying, the missing heat quantity is to be ensured from the outside, by a supplementary heating, e.g. by means of an oil burner. In case, if the heat value exceeds 6000 KJ/kg, by burning the dried sludge demand on thermal energy of drying may be met. Over this value the process is calorific, below it the application of a supplementary heating is needed.

The equipment and the process according to the invention may be expediently used for burning coal dust having been classified by flotation. The coal dust with the high moisture content can be dried with a good efficiency and can be directly fed into the coal mill, i.e. into the coal dust burner. Due to the fact, that the water adhering to the coal dust can be evaporated in the vicinity of the reversibility of the cycle, the heat requirement amounts merely to 700 Kcal/kg instead of the traditional 1000—1100 Kcal/kg, in addition to this, labour intensity of the grinding process and accordingly, energy consumption of the mill are reduced. It is not necessary to lead the hot flue gas from the combustion chamber of the boiler to the grinding process for the purpose of drying, accordingly, the heat contents thereof can be utilized on the after-heating surfaces of the boiler for the pre-heating of the feedwater and air. The expeller 7 and the boiler tube register 31 can be built-in into the draft-path of the boiler resulting in a further reduction of the energy consumption.

The main advantage of the process according to the invention lies in that by using drying air of the same temperature and in the same quantity, a greater quantity of moisture may be removed from the material to be dried, than in course of the traditional processes. In such a manner the temperature of any drying process may be reduced, as a consequence, partly thermodynamical efficiency can be improved, partly the stability of heat sensitive materials to be dried may be ensured. When drying toxic and/or smelly gas producing materials, e.g. sludges, the separated burning of the dry sludge and utilization of the generated heat require considerably less accessory heating energy, than burning of the wet sludge, since in the case of the latter one drying and burning taking place in a common space significantly increase the losses. By utilizing the condense heat having been generated in the heat exchangers 9, 27, thermal economy may be further improved.

A further essential advantage lies in, that whether with newly constructed equipments, whether with already existing equipments, in addition to the reduction of drying temperature, the energetic efficiency of the process will also improve.

By using the invention it becomes possible to pre-dry the entering drying medium, in general the ambient air, or to extract the water steam from the discharged drying medium rich in humidity. In both cases the heat contents of the humidity having been extracted in form of steam, can be well used for increasing the heat content of the drying medium. With driers operating in a closed circuit, the humidity being present in form of steam is discharged by sorption into the atmosphere, while the heat content of the humidity vapour is recirculated into the closed system.

**Claims**

1. A method for drying a material by a gaseous drying medium extracting moisture from the material to be dried, wherein the drying medium is brought into contact with a humidity absorbing solution in an absorber (2), whereafter the solution is heated to expel absorbed humidity in the form of steam which then is condensed to restore heat of evaporation, characterized in that the drying medium together with the absorbing solution when contacting the drying medium are cooled in the absorber (2) and that the heat of evaporation of the expelled steam is supplied into the drying medium.

2. A method as claimed in claim 1, where the drying medium is used in an open system, characterized in that the drying medium is brought into contact with the humidity absorbing medium prior contacting the material to be dried.

3. A method as claimed in claim 1, where the drying medium is used in an open system, characterized in that the drying medium is brought into contact with the humidity absorbing medium after contacting the material to be dried.

4. A method as claimed in claim 1, where the material to be dried is sludge and a toxic or smelly gaseous content of the sludge is to be annihilated, characterized in that the sludge to be dried is previously precondensed to a solid matter content of 30%, subsequently it is dried to a moisture content of 1—2% by means of the drying medium and then the sludge is burnt to expel the humidity absorbed by the absorbing solution.

5. A method as claimed in claim 4, characterized in that a supplementary firing is used for burning the sludge.

6. A method as claimed in claim 5, characterized in that the intensity of the supplementary firing is controlled by the pressure of the steam expelled from the absorbing solution, while the rate of the flow-off of the water excess is regulated by means of the water level of a steam generator (31).

7. An equipment for drying a material by a gaseous drying medium, for performing the method according to claim 1, comprising an absorber (2) in the path of the drying medium provided with a liquid distributor (3) for supplying the humidity absorbing solution, an expeller (7) for expelling the absorbed humidity from the absorbing solution in the form of steam, the steam space of the expeller (7) being connected to a heat exchanger (9), characterized in that a condenser coil (5) is arranged in the absorber (2) for cooling the drying medium together with the absorbing solution when contacting the drying medium and that the heat exchanger (9) is arranged in the path of the drying medium for heat exchange therewith.

8. An equipment as claimed in claim 7, characterized in that the expeller (7) is provided with a combustion equipment (8) delivering warm drying medium.

9. An equipment as claimed in claim 8, characterized in that the flue (10) of the waste gases of the combustion equipment (8) is connected to a mixing-chamber (11) being arranged in the conduit (37) of the absorber (2) delivering the drying medium.

10. An equipment as claimed in claim 8, characterized in that the absorber (2) is provided with a level sensing element (13) which is connected via a regulator (14) to the combustion equipment (8) and/or a control valve (15, 16) thereof.

11. An equipment according to claim 7 for drying a sludge, characterized in that the expeller (7) is incorporated into a furnace (33), a sludge drier (23) being connected to the combustion chamber of the furnace (33) via a drying-line (32) for the dry sludge, while the absorber (2) and the sludge drier (23) are interconnected by means of a pipeline preferably led through the heat carrying space of heat exchangers (9, 27), the air space of the sludge drier (23) being connected to the absorber (2) via a cyclone (24).

12. An equipment as claimed in claim 11, characterized in that it is provided with a steam generator — preferably a boiler tube register (31) — being arranged in the firing chamber of the furnace (33) and connected via a pipeline (28) to the heating space of the heat exchanger.

13. An equipment as claimed in claim 12, characterized in that in the outlet of the steam generator there is a manometer (36), while the combustion equipment (8) is provided with automatic control means being in connection with the manometer.

14. An equipment as claimed in claim 12, characterized in that it is provided with a valve (29) regulating the flow-off, being controlled from the water level of the steam generator (31).

**Patentansprüche**

1. Verfahren zum Trocknen eines Materials durch ein gasförmiges Trocknungsmedium, von welchem aus dem zu trocknenden Material Feuchtigkeit entzogen wird, bei welchem das Trocknungsmedium in Kontakt mit einer Feuchtigkeit absorbierenden Lösung in einem Absorber (2) gebracht wird, wonach die Lösung zum Austreiben absorbierter Feuchtigkeit in Form von Dampf geheizt wird, welcher dann zur Rückgewinnung von Verdampfungswärme kondensiert wird, dadurch gekennzeichnet, daß das Trocknungsmedium zusammen mit der absorbierenden Lösung, wenn diese in Kontakt mit dem Trocknungsmedium steht, in dem Absorber (2) gekühlt wird und daß die Verdampfungswärme des ausgetriebenen Dampfes in das Trocknungsmedium eingeführt wird.

2. Verfahren nach Anspruch 1, bei welchem das Trocknungsmedium in einem offenen System verwendet wird, dadurch gekennzeichnet, daß das Trocknungsmedium in den Kontakt mit der Feuchtigkeit absorbierenden Lösung vor seinem Kontakt mit dem zu trocknenden Material gebracht wird.

3. Verfahren nach Anspruch 1, wobei das Trocknungsmedium in einem offenen System verwendet wird, dadurch gekennzeichnet, daß das Trocknungsmedium in den Kontakt mit der Feuchtigkeit absorbierenden Lösung nach seinem Kontakt mit dem zu trocknenden Material gebracht wird.

4. Verfahren nach Anspruch 1, bei welchem das zu trocknende Material Schlamm ist und ein toxischer oder übelriechender Gasanteil des Schlammes zu beseitigen ist, dadurch gekennzeichnet, daß der zu trocknende Schlamm vorher auf einen Feststoffanteil von 30% verdichtet wird, anschließend auf einen Feuchtigkeitsanteil von 1 bis 2% mittels des Trocknungsmediums getrocknet wird und der Schlamm dann zum Austreiben der Feuchtigkeit verbrannt wird, die in der absorbierenden Lösung absorbiert ist.

5. Verfahren nach Anspruch 4, dadurch gekennzeichnet, daß für das Verbrennen des Schlammes eine Zusatzfeuerung verwendet wird.

6. Verfahren nach Anspruch 5, dadurch gekennzeichnet, daß die Intensität der Zusatzfeuerung von dem Druck des aus der absorbierenden Lösung ausgetriebenen Dampfes gesteuert wird, während die Ableitungsrate des Wasserüberschusses mittels des Wasserpegels eines Dampfgenerators (31) reguliert wird.

7. Anlage zum Trocknen eines Materials mit einem gasförmigen Trocknungsmedium, zur Durchführung des Verfahrens nach Anspruch 1, mit einem in dem Weg des Trocknungsmediums angeordneten Absorber (2), der mit einem Flüssigkeitsverteiler (3) zum Zuführen der Feuchtigkeit absorbierenden Lösung versehen ist, einem Austreiber (7) zum Austreiben der absorbierten Feuchtigkeit aus der absorbierenden Lösung in der Form von Dampf, wobei der Dampfraum des Austreibers (7) an einen Wärmetauscher (9) angeschlossen ist, dadurch gekennzeichnet, daß eine Kondensorschlange (5) in dem Absorber (2) zum Kühlen des Trocknungsmediums zusammen mit der mit dem Trocknungsmedium in Kontakt stehenden absorbierenden Lösung angeordnet ist, und daß der Wärmetauscher (9) in dem Weg des Trocknungsmediums für einen Wärmeaustausch mit diesem angeordnet ist.

8. Anlage nach Anspruch 7, dadurch gekennzeichnet, daß der Austreiber (7) mit einer warmes Trocknungsmedium liefernden Brennvorrichtung (8) versehen ist.

9. Anlage nach Anspruch 8, dadurch gekennzeichnet, daß der Rauchgaskanal (10) der Rauchgase der Brennvorrichtung (8) an eine Mischkammer (11) angeschlossen ist, welche in der das Trocknungsmedium abführenden Leitung (37) des Absorbers (2) angeordnet ist.

10. Anlage nach Anspruch 8, dadurch gekennzeichnet, daß der Absorber (2) mit einem Pegelfühlelement (13) versehen ist, welches über eine Stellvorrichtung (14) an die Brennvorrichtung (8) und/oder ein Steuerventil (15, 16) derselben angeschlossen ist.

11. Anlage nach Anspruch 7 zum Trocknen von Schlamm, dadurch gekennzeichnet, daß der Austreiber (7) in einen Ofen (33) einbezogen ist, wobei ein Schlammtrockner (23) an den Brennraum des Ofens (33) über eine Trocknungsleitung (32) für den trockenen Schlamm angeschlossen ist, während der Absorber (2) und der Schlammtrockner (23) über eine Rohrleitung miteinander verbunden sind, die vorzugsweise durch den wärmeführenden Raum von Wärmetauschern (9, 27) geführt ist, wobei der Luftraum des Schlammtrockners (23) über ein Zyklon (24) an den Absorber (2) angeschlossen ist.

12. Anlage nach Anspruch 11, dadurch gekennzeichnet, daß sie mit einem Dampfgenerator — vorzugsweise einem Boiler-Rohrregister (31) — versehen ist, welcher in dem Feuerungsraum des Ofens (33) angeordnet ist und über eine Rohrleitung (28) an den Wärmeraum des Wärmetauschers angeschlossen ist.

13. Anlage nach Anspruch 12, dadurch gekennzeichnet, daß in dem Auslaß des Dampfgenerators ein Manometer (36) angeordnet ist und die Brennvorrichtung (8) mit einer automatischen Steuerung versehen ist, die mit dem Manometer in Verbindung steht.

14. Anlage nach Anspruch 12, dadurch gekennzeichnet, daß sie mit einem den Ablauf regulierenden Ventil (29) versehen ist, welches von dem Wasserpegel des Dampfgenerators (31) gesteuert ist.

**Revendications**

1. Un procédé pour sécher une matière par un milieu gazeux de séchage extrayant l'humidité de la matière à sécher, dans lequel le milieu de séchage est amené en contact avec une solution d'absorption d'humidité dans un absorbeur (2) et ensuite la solution est chauffée pour extraire l'humidité absorbée sous la forme de vapeur d'eau qui est ensuite condensée pour récupérer la chaleur d'évaporation, caractérisé en ce que le milieu de séchage ainsi que la solution absorbante lorsqu'elle entre en contact avec le milieu de séchage sont refroidis dans l'absorbeur (2) et en ce que la chaleur d'évaporation de la vapeur extraite est fournie au milieu de séchage.

2. Un procédé tel que revendiqué dans la revendication 1, dans lequel le milieu de séchage est utilisé dans un système ouvert, caractérisé en ce que le milieu de séchage est amené en contact avec le milieu d'absorption d'humidité avant d'entrer en contact avec la matière à sécher.

3. Un procédé tel que revendiqué dans la revendication 1, dans lequel le milieu de séchage est utilisé dans un système ouvert, caractérisé en ce que le milieu de séchage est amené en contact avec le milieu d'absorption d'humidité après être entré en contact avec la matière à sécher.

4. Un procédé tel que revendiqué dans la revendication 1, dans lequel la matière à sécher est de la boue et un composant toxique ou gazeux malodorant de la boue doit être annihilé, caractérisé en ce que la boue à sécher est préalablement précondensée jusqu'à une teneur en matières solides de 30% et ensuite elle est séchée jusqu'à une teneur en humidité de 1 à 2% à l'aide du milieu de séchage, puis la boue est brûlée pour extraire l'humidité absorbée par la solution absorbante.

5. Un procédé tel que revendiqué dans la revendication 4, caractérisé en ce qu'un passage au feu supplémentaire est utilisé pour brûler la boue.

6. Un procédé tel que revendiqué dans la revendication 5, caractérisé en ce que l'intensité du chauffage supplémentaire est commandée par la pression de la vapeur d'eau extraite de la solution d'absorption tandis que le débit de décharge de l'excès d'eau est régulé au moyen du niveau d'eau d'un générateur de vapeur (31).

7. Un équipement pour sécher une matière par un milieu gazeux de séchage, pour la mise en pratique du procédé conformé à la revendication 1, comprenent un absorbeur (2) placé dans le trajet du milieu de séchage, pourvu d'un distributeur de liquide (3) pour introduire la solution d'absorption d'humidité, un extracteur (7) pour extraire l'humidité absorbée de la solution absorbante sous la forme de vapeur d'eau, l'espace de vapeur d'eau de l'extracteur (7) étant relié à un échangeur de chaleur (9), caractérisé en ce qu'un serpentin de condenseur (5) est disposé dans l'absorbeur (2) pour refroidir le milieu de séchage en même temps que la solution absorbante lors du contact avec le milieu de séchage et en ce que l'échangeur de chaleur (9) est placé dans le trajet du milieu de séchage en vue d'un échange de chaleur avec celui-ci.

8. Un équipement tel que revendiqué dans la revendication 7, caractérisé en ce que l'extracteur (7) est pourvu d'un équipement de combustion (8) fournissant un milieu de séchage chaud.

9. Un équipement tel que revendiqué dans la revendication 8, caractérisé en ce que le conduit (10) de passage des fumées provenant de l'équipement de combustion (8) est relié à une chambre de mélange (11) placée dans le conduit (37) de l'absorbeur (2) fournissant le milieu de séchage.

10. Un équipment tel que revendiqué dans la revendication 8, caractérisé en ce que l'absorber (2) est pourvu d'un élément de détection de niveau (13) qui est relié par l'intermédiaire d'un régulateur (14) à l'équipement de combustion (8) et/ou à une vanne de commande (15, 16) de celui-ci.

11. Un équipement selon la revendication 7 pour sécher une boue, caractérisé en ce que l'extracteur (7) est incorporé à un foyer (33), un sécheur de boue (23) étant relié à la chambre de combustion du foyer (33) par l'intermédiaire d'un conduit de séchage (32) pour la boue sèche, tandis que l'absorbeur (2) et le sécheur de boue (23) sont reliés entre eux au moyen d'une canalisation passant de préférence au travers de l'espace de transfert de chaleur des échangeurs de chaleur (9, 27), l'espace d'air du sécheur de boue (23) étant relié à l'absorbeur (2) par l'intermédiaire d'un cyclone (24).

12. Un équipement tel que revendiqué dans la revendication 11, caractérisé en ce qu'il est pourvu d'un générateur de vapeur — de préférence une chaudière tubulaire (31) — qui est placé dans la chambre de combustion du foyer (33) et qui relié par l'intermédiaire d'une canalisation (28) avec l'espace de chauffage de l'échangeur de chaleur.

13. Un équipement tel que revendiqué dans la revendication 12, caractérisé en ce qu'il est prévu à la sortie du générateur de vapeur un manomètre (36), tandis que l'équipement de combustion (8) est pourvu de moyens de commande automatiques qui sont reliés au manomètre.

14. Un équipement tel que revendiqué dans la revendication 12, caractérisé en ce qu'il est pourvu d'une vanne (29) de régulation d'écoulement de décharge, qui est commandée en fonction du niveau d'eau du générateur de vapeur (31).

Fig. 1

Fig. 2

1

Fig. 3